# EUROPÄISCHE PATENTSCHRIFT

(11) **EP 1 339 572 B1**
(45) Veröffentlichungstag und Bekanntmachung des Hinweises auf die Patenterteilung: **25.08.2004**
(21) Anmeldenummer: 01998462.4
(22) Anmeldetag: 18.10.2001
(51) Int. Cl.: B60R 21/01, B60R 21/26

(54) **VERFAHREN UND SYSTEM ZUR AUSLÖSUNG VON RÜCKHALTEMITTELN IN EINEM KRAFTFAHRZEUG**
METHOD AND SYSTEM FOR TRIGGERING RETAINING MEANS IN A MOTOR VEHICLE
PROCEDE ET SYSTEME DE DECLENCHEMENT DE MOYENS DE RETENUE DANS UN VEHICULE

(30) Priorität: 30.11.2000 DE 10059426
(43) Veröffentlichungstag der Anmeldung: 03.09.2003
(73) Patentinhaber: ROBERT BOSCH GMBH, 70442 Stuttgart (DE)
(72) Erfinder: ROELLEKE, Michael, 71229 Leonberg-Hoefingen (DE); KOEHLER, Armin, 74343 Sachsenheim (DE)
(86) Internationale Anmeldenummer: PCT/DE2001/003982
(87) Internationale Veröffentlichungsnummer: WO 2002/043992

(56) Entgegenhaltungen:
- WO-A-97/21566
- WO-A-99/03711
- DE-A- 19 740 020
- US-A- 6 095 551

## Beschreibung

### Stand der Technik

Die Erfindung geht aus von einem Verfahren zum Auslösen von Rückhaltemitteln in einem Kraftfahrzeug nach der Gattung des unabhängigen Patentanspruchs.

Es ist bereits bekannt, mit Fahrzeugsensoren, beispielsweise Beschleunigungssensoren, einen Unfall zu erkennen, indem Sensorsignale von diesen Beschleunigungssensoren mit vorgegebenen Schwellwerten verglichen werden. Darüber hinaus ist es bekannt, Fahrzeugsensoren wie eine Sitzmatte in einem Fahrzeugsitz zur Insassenklassifizierung zu verwenden.

Aus der gattungsbildenden WO 99/03711 ist es bekannt, das Gewicht eines Fahrzeuginsassen bei einer Kollision beim Einsatz von Rückhaltemitteln zu berücksichtigen. Aus DE 197 40 020 A1 ist es bekannt, einen Gassack abhängig von aktuellen Daten der Aufprallerkennungseinrichtung und/oder von aktuellen Daten einer Einrichtung zur Insassen- oder Objekterkennung zu steuern. Aus WO 97/21566 ist es bekannt, einen Fahrzeuginsassen individuell vor den Folgen eines Verkehrsunfalls zu schützen. Dabei werden die aktuellen Umstände der Unfallsituation berücksichtigt, insbesondere solche Parameter, die die individuelle kinetische Energie des Fahrzeuginsassen bestimmen.

### Vorteile der Erfindung

Das erfindungsgemäße Verfahren zur Auslösung von Rückhaltemitteln in einem Kraftfahrzeug mit den Merkmalen des unabhängigen Patentanspruchs hat demgegenüber den Vorteil, dass eine Unfallschwere anhand der Sensorsignale ermittelt wird, um damit eine bessere Ansteuerung der notwendigen Rückhaltemittel, die gegebenenfalls in Stufen oder stufenlos schaltbar sind, zu ermöglichen. Dies bedeutet, dass die Rückhaltemittel derart angesteuert werden, so dass ein optimaler Schutz in Anbetracht der ermittelten Unfallschwere erreicht wird.

Weiterhin ist es von Vorteil, dass durch die Kombination der ermittelten Unfallschwere mit der Insassenklassifizierung ein optimaler Einsatz der Rückhaltemittel erfolgt, indem die Unfallschwere und die Insassenklassifizierung miteinander verknüpft werden, um so allein die notwendigen Rückhaltemittel zu adressieren. Dadurch ist es möglich, dass einerseits bestimmt wird, wie die Person sitzt und welche klassifizierenden Merkmale die Person aufweist und andererseits eine mögliche Unfallschwere verwendet wird, wobei beide, die Insassenklassifizierung und die Unfallschwere, voneinander unabhängig bestimmt werden. Es werden daher vorteilhafterweise keine Rückhaltemittel ausgelöst, wenn dadurch keine Person geschützt wird.

Darüber hinaus ist es von Vorteil, dass auch zeitliche Abläufe so beim Einsatz der Rückhaltemittel berücksichtigt werden können, indem beispielsweise anhand der Sensorsignale erkannt wird, wann eine zweite Stufe eines Airbags gezündet werden muß, um einen optimalen Schutz zu erreichen.

Das erfindungsgemäße Verfahren erlaubt durch die Trennung zwischen Unfallschwereerkennung und Insassenklassifizierung einen modularen und strukturierten Aufbau der notwendigen Algorithmen. Die Unfallschwereerkennung und die Insassenklassifizierung werden solange voneinander unabhängig gehalten, bis sie letztlich miteinander verknüpft werden, um die notwendigen Rückhaltemittel zu adressieren. Damit wird das Fehlen beispielsweise einer Sensorinformation sich erst bei der Verknüpfung der Unfallschwereerkennung und der Insassenklassifizierung auswirken. Dann können die Rückhaltemittel in Abhängigkeit von der Güte der Unfallschwereerkennung und der Insassenklassifizierung mehr oder weniger angepasst ausgelöst werden.

Durch die in den abhängigen Ansprüchen aufgeführten Maßnahmen und Weiterbildungen sind vorteilhafte Verbesserungen des im unabhängigen Patentanspruch angegebenen Verfahrens zur Auslösung von Rückhaltemitteln in einem Kraftfahrzeug möglich.

Besonders von Vorteil ist, dass die ersten Sensorsignale, die zur Unfallschwerebestimmung verwendet werden, Fahrdynamikdaten, eine Fahrzeugintrusion und Fahrzeugumgebungsdaten erfassen. Fahrdynamikdaten sind dabei Beschleunigungen linearer und zirkularer Art. Damit wären dann also Bremsvorgänge und auch Überrollvorgänge erfasst. Intrusion bedeutet hier, dass ein fremder Gegenstand mit dem Kraftfahrzeug zusammenstößt und gegebenenfalls die Fahrgastzelle eindrückt und es damit zu einer sogenannten Intrusion kommt. Ein Beispiel hierfür ist ein Drucksensor, der in einem Seitenteil eines Kraftfahrzeugs untergebracht ist, um bei einem Zusammenprall die Luftkompression in dem Seitenteil zu erfassen. Fahrzeugumgebungsdaten werden durch Bildsensoren, Ultraschall oder beispielsweise Radar ermittelt, um mit dem Fahrzeug kollidierende Gegenstände möglichst frühzeitig vor der Kollision zu erfassen und um diese mögliche Kollision noch abzuwenden. Durch diese Sensordaten liegen dann umfassende Daten über das Fahrzeug und die Umgebung sowie insbesondere Aufpralldaten vor, die zu einer Unfallschwerebestimmung und Schätzung führen. Den einzelnen Auslöseereignisse können auch jeweils Unfallschweredaten zugeordnet werden, die dann in die Verknüpfung mit der Klassifizierung der Fahrzeuginsassen eingehen. Ein Unfall kann aus einer Kombination der Auslöseereignisse bestehen.

Weiterhin ist es von Vorteil, dass mit weiteren Sensorsignalen das Gewicht, die Sitzposition und die Verwendung eines Fahrzeuggurtes zur Insassenklassifizierung verwendet werden. Damit kann ein umfassendes Bild von dem jeweiligen Insassen gewonnen werden, um so eine vollständige Klassifizierung vorzunehmen. Beispielsweise kann man Personen in drei verschiedene Klassen einteilen, zum einen das Kind, das nicht durch einen Airbag zu schützen ist, um eine Verletzung durch den Airbag zu vermeiden, eine 45kg-Frau, die durch einen Airbag mit schwachem Druckanstieg geschützt werden kann, ohne verletzt zu werden, und die übrigen Personen, die durch eine Airbagstufe mit höherem Druckanstieg schützbar sind, ohne eigene Verletzungen zu riskieren, da sie in der Regel weiter von einem Airbag-Modul entfernt sind. Als Sensoren können hier beispielsweise druckabhängige Widerstandselemente in einer Sitzmatte eines jeweiligen Fahrzengsitzes eingesetzt werden, wobei damit Sitzprofile erstellbar sind, aus denen das Gewicht der jeweiligen Person, die Sitzbelegung und auch die Sitzposition entnehmbar sind. Aber auch optische oder Ultraschallsensoren sind hier verwendbar. Durch eine weitere entsprechende Sensorik ist feststellbar, ob ein Fahrzeuggurt verwendet wurde oder nicht.

Darüber hinaus ist es von Vorteil, dass ein System vorliegt, das zur Durchführung des oben beschriebenen Verfahrens die notwendigen Mittel aufweist.

### Zeichnung

Ausführungsbeispiele der Erfindung sind in der Zeichnung dargestellt und werden in der nachfolgenden Beschreibung näher erläutert. Figur 1 zeigt ein Flussdiagramm des erfindungsgemäßen Verfahrens, Figur 2 ein Blockschaltbild der erfindungsgemäßen Vorrichtung, Figur 3 ein Blockschaltbild der Vorverarbeitung von Sensorsignalen und Figur 4 eine Auslösematrix zur Ansteuerung der Rückhaltemittel.

### Beschreibung

Durch den zunehmenden Einsatz von immer mehr Airbags in einem Kraftfahrzeug ist es notwendig, diese Airbags möglichst situationsgerecht anzusteuern. Auch, dass Airbags in Stufen zündbar sind, bedeutet, dass dieser Freiheitsgrad der Ansteuerung in Abhängigkeit von der Unfallsituation und den jeweiligen Fahrzeuginsassen durchgeführt werden sollte. Die jeweilige Situation wird dabei von einer möglichen Unfallschwere und dem jeweiligen Insassen bestimmt. Ein Front- oder Seitenaufprall bedeutet für einen Insassen eine potenzielle größere Unfallschwere als ein Heckaufprall. Abhängig von dem Gewicht der Person können bei insbesondere mehrstufigen Airbags entsprechende Rückhaltekräfte auf die Person ausgeübt werden, um einen optimalen Schutz zu gewährleisten, ohne den Insassen durch das Rückhaltemittel zu verletzen.

Erfindungsgemäß wird daher ein Verfahren zur Auslösung von Rückhaltemitteln in einem Kraftfahrzeug eingesetzt, bei dem unabhängig voneinander die Unfallschwere und die Insassenklassifizierung durchgeführt werden. Damit wird erreicht, dass eine Rückwirkung oder Fehlerfortpflanzung durch einen falschen oder fehlenden Sensorwert bei der Bestimmung der beiden Parameter nicht auftritt. Durch die Verknüpfung der Unfallschwere mit der Insassenklassifizierung wird dann eine individuelle Ansteuerung der jeweiligen Rückhaltemittel möglich. Dabei ist auch gemeint, dass eine zeitliche Ansteuerung bei mehrstufigen Airbags durch diese Verknüpfung ermöglicht werden kann.

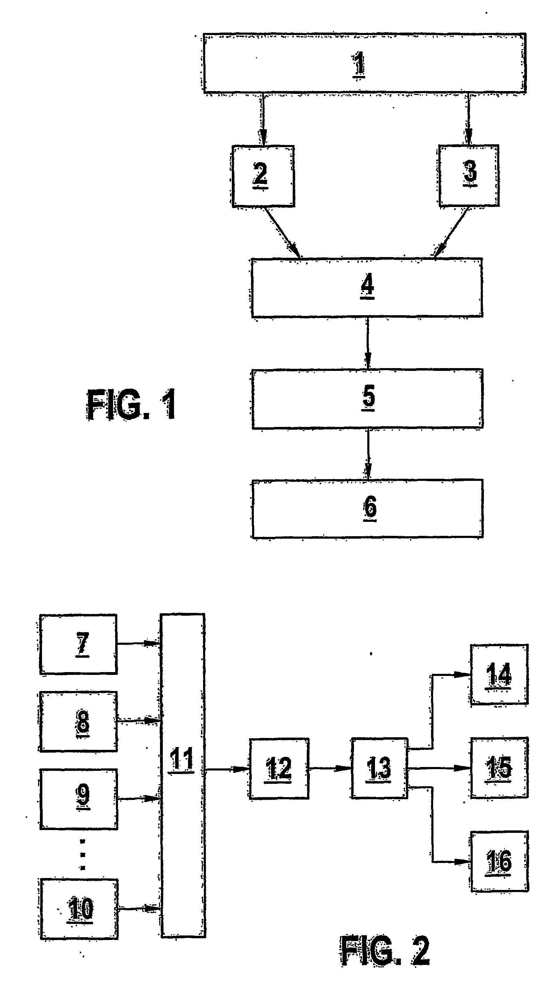

In Figur 1 ist als Flußdiagramm das erfindungsgemäße Verfahren zur Auslösung von Rückhaltemitteln in einem Kraftfahrzeug dargestellt. In einem ersten Schritt werden dabei verschiedene Sensorsignale erfasst und digitalisiert. Es werden hier Beschleunigungssensoren, Drehratensensoren, Radarsensoren, Ultraschallsensoren und eine Seitenaufprallsensorik, beispielsweise Drucksensoren, eingesetzt, die im Fahrzeug verteilt sind und sich auch im Steuergerät der Rückhaltemittel befinden können. Im Steuergerät wird dass erfindungsgemäße Verfahren durchgeführt.

Es sind jedoch viele weitere Sensorprinzipien, die zur Unfallschwereerkennung geeignet sind, möglich. Die Fahrzeugsensoren müssen dabei eines der vier Ereignisse wie Frontaufprall, Seitenaufprall, Heckaufprall oder Überschlag erfassen oder zumindest durch die Kombination der Sensorsignale erfaßbar machen.

In Verfahrensschritt 2 werden aus diesen Sensorsignalen durch das Steuergerät der Rückhaltemittel die Unfallschwere bestimmt. Dabei können spezielle Klassifizierungsansätze oder das Überschreiten von dynamischen sowie statischen Schwellwerten mit der Betrachtung der Überschreitungszeit verwendet werden.

Die Sensorsignale werden dabei jeweils über eine eigene Signalvorverarbeitung ausgewertet und dann entsprechend der erkannten Eigenschaften einem der vier oben genannten Auslöseereignisse zugeordnet. Die Zuordnung wird mit einer Signalverknüpfung verbunden, welche als Ergebnis eine Bestimmung der jeweiligen Unfallschwere zur Folge hat. Die Unfallschwere kann je nach Vermögen der eingesetzten Sensorik in unterschiedlicher Stufung und Auflösung erfolgen.

Die Klassifizierung einer Unfallschwere kann anhand von einer Merkmalsanalyse erfolgen. Beispielsweise erlaubt die Verwendung der Wavelet-Transformation auf Unfallbeschleunigungssignale Informationen über die maximalen Signalenergien sowie über mittlere Signalenergien in verschiedenen Frequenzbändern des Signals. Dies sind dann charakteristische Informationen für die einzelnen Unfalltypen und in Kombination lassen sie sich zur Klassifizierung oder Erkennung einer Unfallschwere verwenden. Es liegen hier dann zwei Merkmale pro Frequenzband vor. Mittels dieser Merkmale lassen sich dann die einzelnen Unfalltypen identifizieren. Man kann verschiedene Unfalltypen einteilen, wobei zu jedem Unfalltyp ein Satz von Merkmalen vorliegt. Die von einem Fahrzeugsensor ermittelten Merkmale werden mit diesen abgespeicherten Merkmalen verglichen, wobei dabei Differenzen zwischen den ermittelten und den abgespeicherten Merkmalen gebildet werden. Es werden also Energiedifferenzen ermittelt. Diese Differenzen müssen unter einem vorgegebenen Schwellwert liegen, damit ein Unfalltyp und damit die Unfallschwere identifiziert werden kann. Es müssen also alle Merkmale eines Satzes für einen Unfall eine Differenz unter diesem ersten Schwellwert aufweisen. Nur dann ist der jeweilige Unfalltyp identifizierbar. Die Unfalltypen sind so beschaffen, dass immer eine Identifikation ermöglicht wird, wobei auch wenigstens ein Unfalltyp einen Nichtauslöser darstellt. Das sind solche Unfalltypen, die kein Auslösen der Rückhaltemittel nach sich ziehen.

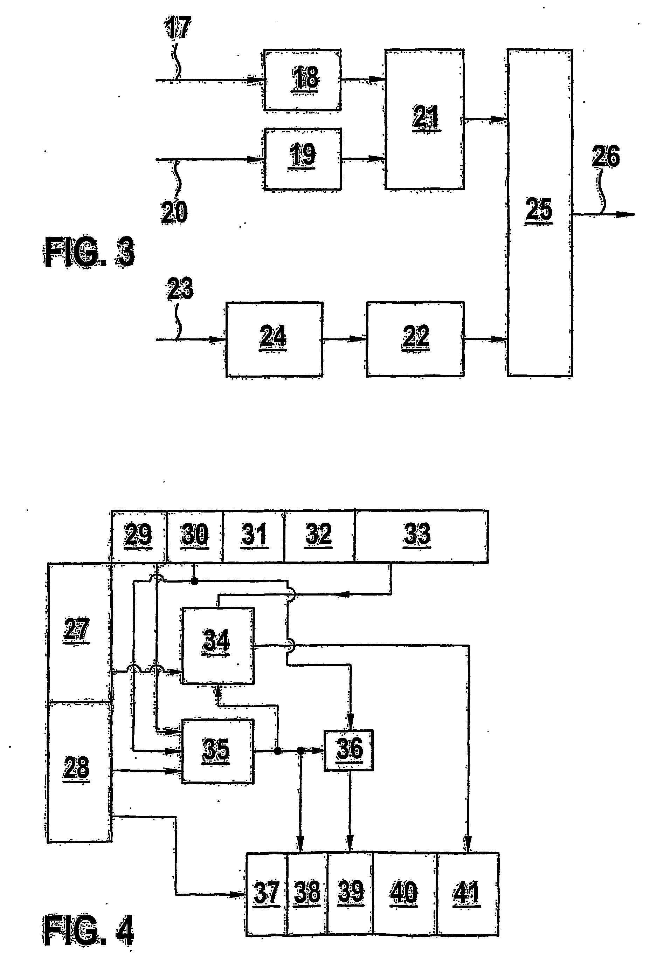

In Figur 3 ist als Blockschaltbild die Signalvorverarbeitung von Beschleunigungssignalen dargestellt. An den Eingängen 17 und 20 werden Beschleunigungssignale von ausgelagerten Beschleunigungssensoren, also Beschleunigungssensoren, die sich außerhalb des Steuergeräts des Rückhaltesystems befinden, empfangen, um dann jeweils in den Integratoren 18 und 19 integriert zu werden, wobei anhand des integrierten Signals im Block 21 ein Unfalltyp oder eine Unfallschwere-Information dieses Sensors bestimmt wird. Dieser Unfalltyp kann beispielsweise anhand des integrierten Signals an einer vorgegebenen Verzögerungszeit und an der Steigung eingeteilt werden. Der erkannte Unfalltyp wird dann an den Block 25 weitergegeben, der die Unfallschwere bestimmt, wobei er dabei auch das Signal, das an den Signaleingang 23 angelegt wird, mit verwendet. Dieses Signal ist ein Beschleunigungssignal, das im Steuergerät durch einen dort untergebrachten Sensor erzeugt wird. Es können hier auch zwei zueinander senkrecht stehende Beschleunigungssensoren verwendet werden, um die Beschleunigungen in Fahrtrichtung und in Seitenrichtung zu erkennen.

Auch dieses Signal wird im Block 24 integriert, um dann im Block 22 anhand seines Verlaufes einer Unfallschwere zugeordnet zu werden. Zur Gewinnung der Unfallschwere erfolgt ein Vergleich des Integrals mit einer, aus den Beschleunigungssignalen gebildeten Schwelle. Es sind jedoch auch andere Ansätze zur Klassifizierung von Signalen denkbar. Diese Unfallschwere wird an einen zweiten Dateneingang des Blocks 25 übertragen, der dann aus diesen beiden Unfallschwereklassifizierungen eine fusionierte Unfallschwere-Klassifizierung vornimmt. Damit werden verschiedene Sensoren, die unabhängig voneinander Signale sensieren, in Bezug auf ihre Signale und den daraus folgenden Ergebnissen verknüpft, um die gesamte Unfallschwere zu bestimmen. Die Unfallschwere liegt dann als Wert zwischen Null und Eins oder zwischen Null und hundert Prozent vor. Damit wird dann bestimmt, wie schwer ein Unfall eingeschätzt wird. Dabei kann es insbesondere auch sein, dass sowohl ein Frontaufprall als auch ein Seitenaufprall gleichzeitig bei einem Unfall jeweils mit einer gewissen Unfallschwere belegt werden.

In Figur 1 im Verfahrensschritt 3, der parallel zu Verfahrensschritt 2 abläuft, wird die Insassenklassifizierung vorgenommen. Die Insassenklassifizierung wird hier mittels einer Sitzmatte, die sich in einem jeweiligen Fahrzeugsitz beendet, vorgenommen. Die Sitzmatte weist druckabhängige Widerstände auf, die ein Sitzprofil der auf dem Fahrzeugsitz sitzenden Person oder des Gegenstandes erzeugen. Dieses Sitzprofil wird von einer der Sitzmatte zugeordneten Steuereinheit berechnet und ausgewertet. Dabei wird das Gewicht, die Sitzposition und die Verwendung eines Anschnallgurts, der mit einem zusätzlichen Sensor in Bezug auf seine Verwendung erfasst wird, berücksichtigt. Insbesondere die Positionsbestimmung ist in Bezug auf den Bereich, der durch den aufgeblasenen Airbag ausgefüllt wird, von großer Wichtigkeit. Befindet sich ein Insasse während der Airbagaufblasung in diesem Bereich, der auch Keep-Out-Zone genannt wird, so erfolgt ein Kontakt mit dem sich rasch entfaltenden Airbag. Dies kann zu erheblichen Verletzungen führen, so dass dann eine Airbagaufblasung unbedingt zu vermeiden ist. Diese Überwachung kann statisch oder dynamisch erfolgen.

In Figur 1 in Verfahrensschritt 4 und 5 wird nun anhand der Unfallschwere und der Insassenklassifizierung eine Verletzungsgefahr bestimmt. Diese Verletzungsgefahr wird hier über eine Matrix zur Ansteuerung der Rückhaltemittel realisiert. In Figur 4 ist eine solche Matrix dargestellt. In einer linken Spalte sind die potenziellen Auslöseereignisse Seitenaufprall 27 und Frontaufprall 28 abgelegt, wobei hier diese Unfallereignisse mit einem Prozentsatz gewichtet werden, der die Unfallschwere ausdrückt. Auch die anderen Unfall- oder Auslöseereignisse können hier ergänzt werden, um dann in die Verknüpfung einzugehen.

In der oberen Zeile sind in den Feldern 29, 30, 31, 32 und 33 die Insassenklassifizierungsmerkmale Verwendung des Gurts 29, Gewicht des Insassen 30, Sitzposition 31, Versetzung nach vorne 32 und seitliche Versetzung 33 dargestellt. Die seitliche Versetzung 33, die Unfallschwere des Seitenaufpralls 27 und das Ergebnis einer weiteren Verknüpfung werden in dem Gatter 34 miteinander verknüpft, um gegebenenfalls einen Window-Bag oder Inflatable-Curtain, der durch das Feld 41 repräsentiert wird, anzusteuern. Bei einem Window-Bag oder Inflatable-Curtain handelt es sich um einen Airbag, der aus dem Fahrzeughimmel über dem Seitenfenster oder der B-Säule sich entfaltet, um einen Schutz zwischen Fahrzeuginsasse und Seitenteil des Fahrzeugs zu bringen.

Die Information über die Verwendung eines Gurts 29, das Gewicht der betreffenden Person 30 und die Unfallschwere in Bezug auf einen Frontaufprall 28 werden in dem Gatter 35 miteinander verknüpft, um gegebenenfalls den Frontairbag, beispielsweise im Lenkrad, auszulösen. Das Gatter 35 ist über seinen Datenausgang neben der Verbindung mit dem Gatter 34 auch mit dem Zeitglied 36 verbunden. Das Zeitglied 36 verzögert das Signal um einen vorgegeben Wert, um dann die zweite Stufe des Frontairbags 39 zu zünden. Das Gewicht 30 wird auch direkt auf das Zeitglied 36 gegeben, so dass nach dem vorgegebenen Wert sowohl die erste als auch zweite Airbagstufe zündbar sind.

Die Verknüpfungen basieren auf vorangegangenen Simulationen und Tests, wobei hier insbesondere Fuzzy-Logik-Konzepte anwendbar sind. Die Verknüpfung in den Gattern 34 und 35 erfolgt dann anhand dieses Wissens über die Auswirkungen von einer Unfallschwere auf einen Insassen. Dabei liegen dann im Steuergerät Tabellen vor, die je nach den Signalen, die an den Eingängen der Gatter 34 und 35 anliegen, die Zuordnung und Ansteuerung der Rückhaltemittel festlegen. Im einfachsten Fall kann dies durch logische Verknüpfungen erfolgen. Weitere Verknüpfungen sind hier möglich.

In Verfahrensschritt 6 erfolgt dann letztlich die Ansteuerung der notwendigen Rückhaltemittel, die durch die Auslösematrix bestimmt wurden.

In Figur 2 wird als Blockschaltbild die erfindungsgemäße Vorrichtung zur Durchführung des Verfahrens dargestellt. Ein Beschleunigungssensor 7, eine Insassenklassifizierung (Sitzmatte) 8, ein Umgebungssensor 9 und ein Drehratensensor 10 sind hier beispielhaft dargestellt, die an eine Schnittstelle 11 eines Airbagsteuergeräts anschließbar sind. Es sind hier weit mehr Sensoren einschließbar, die dann zu einer feineren Ansteuerung der notwendigen Rückhaltemittel führen. Die Schnittstelleneinheit 11 formt aus den Sensorsignalen ein Multiplex, den der Prozessor 12, der an den Datenausgang des Schnittstellenelements 11 angeschlossen ist, auswertet. Der Prozessor 11 führt das oben beschriebene Verfahren durch, also die Bestimmung der Unfallschwere, der Insassenklassifizierung und deren Verknüpfung, um dann über eine Ansteuerung 13 die jeweiligen Rückhaltemittel 14, 15, 16 situationsgerecht anzusteuern.

## Patentansprüche

1. Verfahren zur Auslösung von Rückhaltemitteln in einem Kraftfahrzeug, wobei in Abhängigkeit von ersten Sensorsignalen von ersten Fahrzeugsensoren (7, 9; 10) ein Unfall erkannt wird, wobei eine Klassifizierung von Fahrzeuginsassen anhand zweiter Sensorsignale von zweiten Fahrzengsensoren (8) durchgeführt wird, wobei eine Unfallschwere nach wenigstens einem der durch die ersten Sensorsignale erkannten Auslöseereignisse Frontaufprall, Seitenaufprall, Heckaufprall oder Fahrzeugüberschlag bestimmt wird und wobei die Klassifizierung der Fahrzeuginsassen und die Unfallschwere miteinander verknüpft werden, um die für die Fahrzeuginsassen notwendigen Rückhaltemittel auszulösen, **dadurch gekennzeichnet, dass** die Unfallschwere zusätzlich in Abhängigkeit von einem Unfalltyp bestimmt wird, der anhand von aus den ersten Signalen extrahierten Merkmalen ermittelt wird, indem Differenzen zwischen den extrahierten und abgespeicherten Merkmalen gebildet werden, wobei die Differenzen mit einem vorgegebenen Schwellwert verglichen werden.

2. Verfahren nach Anspruch 1, **dadurch gekennzeichnet, dass** aus den ersten Sensorsignalen Fahrdynamikdaten und/oder Intrusionsdaten und/oder Fahrzeugumgebungsdaten zur Bestimmung der Auslöseereignisse ermittelt werden.

3. Verfahren nach Anspruch 1 oder 2, **dadurch gekennzeichnet, dass** jeweils für die einzelnen Auslöseereignisse Unfallschweredaten bestimmt werden, wobei dann die Unfallschweredaten mit der Klassifizierung der Fahrzeuginsassen verknüpft werden.

4. Verfahren nach Anspruch 1, 2 oder 3, **dadurch gekennzeichnet, dass** aus den zweiten Sensorsignalen ein Gewicht des jeweiligen Fahrzeuginsassen und eine jeweilige Sitzposition und eine Verwendung eines jeweiligen Fahrzeuggurtes zur Klassifizierung der Fahrzeuginsassen durchgeführt wird.

5. System zur Durchführung des Verfahrens nach einem der Ansprüche 1 bis 5, das einen Prozessor (12) umfasst, der die Unfallschwere und die Klassifizierung der Fahrzeuginsassen anhand der ersten und zweiten Steuersignale durchführt und die Rückhaltemittel (14, 15, 16) entsprechend ansteuert, wobei der Prozessor mit den ersten und zweiten Fahrzeugsensoren (7, 8, 9, 10) im Kraftfahrzeug verbindbar ist und die Verknüpfung der Unfallschwere und der Klassifizierung der Fahrzeuginsassen durchführt, um die danach notwendigen Rückhaltemittel (14, 15, 16) anzusteuern, **dadurch gekennzeichnet, dass** der Prozessor (12) die Unfallschwere zusätzlich in Abhängigkeit von einem Unfalltyp bestimmt, den der Prozessor (12) anhand von aus den ersten Signalen extrahierten Merkmalen ermittelt, indem Differenzen zwischen den extrahierten und abgespeicherten Merkmalen gebildet werden, wobei die Differenzen mit einem Schwellwert verglichen werden.

6. System nach Anspruch 5, **dadurch gekennzeichnet, dass** die ersten Fahrzeugsensoren (7, 9,10) zur Bestimmung der Unfallschwere im Kraftfahrzeug die Fahrdynamikdaten und/oder die Intrusionsdaten und/oder die Fahrzeugnmgebungsdaten erfassen und die zweiten Fahrzeugsensoren (8) zur Klassifizierung der Fahrzeuginsassen das Gewicht und die Sitzposition des jeweiligen Fahrzeuginsassen und die Verwendung des jeweiligen Fahrzeuggurts erfassen.

## Claims

1. Method for triggering restraining means in a motor vehicle, an accident being detected as a function of first sensor signals from first vehicle sensors (7, 9; 10), the vehicle occupants being classified using second sensor signals from second vehicle sensors (8), the severity of an accident being determined according to at least one of the triggering events comprising head-on impact, lateral impact, rear-end impact or vehicle rollover which are detected by means of the first sensor signals, and the classification of the vehicle occupants and the severity of the accident being logically linked to one another in order to trigger the restraining means which are necessary for the vehicle occupants, **characterized in that** the severity of the accident is additionally determined as a function of a type of accident which is acquired using features which are extracted from the first signals by forming differences between the extracted features and stored features, the differences being compared with a predefined threshold value.

2. Method according to Claim 1, **characterized in that** vehicle dynamics data and/or intrusion data and/or vehicle surroundings data for determining the triggering events is acquired from the first sensor signals.

3. Method according to Claim 1 or 2, **characterized in that** accident severity data is determined in each case for the individual triggering events, the accident severity data being then logically linked to the classification of the vehicle occupants.

4. Method according to Claim 1, 2 or 3, **characterized in that** a weight of the respective vehicle occupant and a respective sitting position and a use of a respective vehicle seatbelt is carried out from the second sensor signals in order to classify the vehicle occupants.

5. System for carrying out the method according to one of Claims 1 to 5 which comprises a processor (12) which carries out the severity of the accident and the classification of the vehicle occupants using the first and second control signals and correspondingly actuates the restraining means (14, 15, 16), it being possible to connect the processor to the first and second vehicle sensors (7, 8, 9, 10) in the motor vehicle and said processor carrying out the logic linking of the severity of the accident and the classification of the vehicle occupants in order to actuate the restraining means (14, 15, 16) which are necessary after that, **characterized in that** the processor (12) additionally determines the severity of the accident as a function of a type of accident which the processor (12) determines using features extracted from the first signals by forming differences between the extracted features and stored features, the differences being compared with a threshold value.

6. System according to Claim 5, **characterized in that** the first vehicle sensors (7, 9, 10) for determining the severity of the accident in the motor vehicle sense the vehicle dynamics data and/or the intrusion data and/or the vehicle surroundings data, and the second vehicle sensors (8) for classifying the vehicle occupants sense the weight and the sitting position of the respective vehicle occupant and the use of the respective vehicle seatbelt.

## Revendications

1. Procédé de déclenchement de moyens de retenue dans un véhicule automobile, selon lequel un accident est détecté en fonction de premiers signaux provenant de premiers capteurs du véhicule (7, 9 ; 10), une classification des passagers du véhicule est effectuée à l'aide de deuxièmes signaux provenant de deuxièmes capteurs du véhicule (8), un degré de gravité de l'accident est déterminé selon au moins l'un des événements de déclenchement impact frontal, impact latéral, impact arrière ou retournements détectés par les premiers signaux, et la classification des passagers du véhicule et le degré de gravité de l'accident sont associés afin de déclencher les moyens de retenue nécessaires pour les passagers du véhicule,
**caractérisé en ce que**
le degré de gravité de l'accident est en outre déterminé en fonction d'un type d'accident qui est calculé à l'aide de caractéristiques extraites des premiers signaux, dans le sens où il se forme des différences entre les caractéristiques extraites et les caractéristiques stockées, ces différences étant alors comparées avec une valeur de seuil prédéterminée.

2. Procédé selon la revendication 1,
**caractérisé en ce que**
des données relatives à la dynamique de conduite et/ou des données d'intrusion et/ou des données relatives à l'environnement du véhicule sont calculées à partir des premiers signaux afin de permettre la détermination des événements de déclenchement.

3. Procédé selon la revendication 1 ou 2,
**caractérisé en ce que**
des données relatives au degré de gravité de l'accident sont respectivement déterminées pour les événements de déclenchement individuels, ces données relatives au degré de gravité de l'accident étant alors associées à la classification des passagers du véhicule.

4. Procédé selon la revendication 1, 2 ou 3,
**caractérisé en ce que**
le poids des passagers respectifs du véhicule, leur position assise respective et l'utilisation des ceintures de sécurités respectives sont déterminés à partir des deuxièmes signaux afin de permettre la classification des passagers du véhicule.

5. Système de mise en oeuvre du procédé selon l'une des revendications 1 à 5, comportant un processeur (12) qui détermine le degré de gravité de l'accident et effectue la classification des passagers du véhicule à l'aide de premiers et deuxièmes signaux, et qui commande les moyens de retenue (14, 15, 16) en conséquence, le processeur pouvant être relié aux premiers et deuxièmes capteurs du véhicule (7, 8, 9, 10) dans le véhicule et effectuant l'association du degré de gravité de l'accident avec la classification des passagers du véhicule, afin de commander ensuite les moyens de retenue nécessaires (14, 15, 16),
**caractérisé en ce que**
le processeur (12) détermine en outre le degré de gravité de l'accident en fonction d'un type d'accident qui est calculé par le processeur (12) à l'aide des caractéristiques extraites des premiers signaux, dans le sens où il se forme des différences entre les caractéristiques extraites et les caractéristiques stockées, ces différences étant alors comparées avec une valeur de seuil.

6. Système selon la revendication 5,
**caractérisé en ce que**
les premiers capteurs du véhicule (7, 9, 10) permettant la détermination du degré de gravité de l'accident dans le véhicule enregistrent les données relatives à la dynamique de conduite et/ou les données d'intrusion et/ou les données relatives à l'environnement du véhicule, et les deuxièmes capteurs du véhicule (8) permettant la classification des passagers du véhicule enregistrent le poids et la position assise des passagers respectifs du véhicule ainsi que l'utilisation des ceintures de sécurité respectives.
